# NEUE EUROPÄISCHE PATENTSCHRIFT

(11) **EP 0 509 258 B2**
(45) Veröffentlichungstag und Bekanntmachung des Hinweises auf die Entscheidung über den Einspruch: **15.10.2003**
(45) Hinweis auf die Patenterteilung: 14.02.1996
(21) Anmeldenummer: 92104659.5
(22) Anmeldetag: 18.03.1992
(51) Int. Cl.: B01D 53/34, B01D 53/64, B01D 53/70, B01D 53/72

(54) **Verfahren zum Reinigen von Rauchgasen**
Process for purifying flue gases
Procédé pour la purification de fumées

(30) Priorität: 17.04.1991 CH 115991
(43) Veröffentlichungstag der Anmeldung: 21.10.1992
(73) Patentinhaber: Von Roll Umwelttechnik AG, 8005 Zürich (CH)
(72) Erfinder: Rüegg, Hans, CH-5610 Wohlen (CH)
(74) Vertreter: Patentanwälte Schaad, Balass, Menzl & Partner AG

(56) Entgegenhaltungen:
- EP-A- 0 253 563
- EP-A- 0 357 960
- EP-A- 0 487 913
- DE-A- 3 941 894
- WASSER, LUFT UND BODEN, ZEITSCHRIFT FüR UMWELTTECHNIK Nr. 6, Juli 1989, MAINZ, Seiten 39 - 42; M. LEMANN:"Mehrstufige Rauchgasreinigung für Müllverbrennungsanlagen"

## Beschreibung

Die vorliegende Erfindung betrifft ein Verfahren zum Reinigen von Rauchgasen durch Waschen.

Ein Verfahren dieser Art ist aus dem Artikel "Mehrstufige Rauchgasreinigung für Müllverbrennungsanlagen" in der Zeitschrift wlb, Wasser, Luft und Boden, Zeitschrift für Umwelttechnik, Nummer 6 vom Juli 1989, bekannt. Dabei wird das Rauchgas durch einen dreistufigen Wäscher mit einer Quench-, einer Füllkörper- und einer Ringjetstufe geleitet, wobei die Waschflüssigkeit im Gegenstrom zum Rauchgas geführt wird. Bei heute üblichen Verfahren, bei welchen die Rauchgase durch Waschen gereinigt werden, ist es nicht möglich, eine merkliche Abscheidung von organischen Schadstoffen, wie Dioxine und Furane, zu erzielen. Auch die Abscheidung von Metallen, insbesondere Schwermetallen wie Quecksilber, ist ungenügend. Weiter können bei Rauchgasreinigungsanlagen, in welchen die Rauchgase gewaschen werden und die Waschflüssigkeit einer Abwasserbehandlung unterzogen wird, die Abwassergrenzwerte für Quecksilber üblicherweise nur eingehalten werden, wenn bei der Abwasserbehandlung zusätzlich zur reinen Hydroxydfällung, wie sie beispielsweise durch die Neutralisation durch Kalkmilch gegeben ist, noch zusätzlich Fällungsmittel beigegeben werden. Wird das von einem Wäscher abgeschlämmte Waschwasser in einem Sprühtrockner eingedampft, so wird das im Waschwasser enthaltene Quecksilber wieder freigesetzt, was für das Rauchgas vor dem Wäscher eine zusätzliche Quecksilberbelastung bedeutet. Dies erfordert besondere Massnahmen für die Entfernung des Quecksilbers.

Es ist deshalb eine Aufgabe der vorliegenden Erfindung, den Wirkungsgrad bei Verfahren zur Reinigung von Rauchgasen durch Waschen bezüglich der Abscheidung von organischen Schadstoffen und Metallen wesentlich zu verbessern.

Diese Aufgabe wird durch ein Verfahren gelöst, welches die Merkmale des Anspruchs 1 aufweist.

Durch das Eingeben des Adsorptionsmittels in das Rauchgas vor dem Waschvorgang wird bereits vor dem Wäscher ein Teil der Schadstoffe adsorbiert. Das Adsorptionsmittel wird dann zusammen mit den anderen Schadstoffen im Wäscher aus dem Rauchgas ausgewaschen, wodurch die Waschflüssigkeit mit dem Adsorptionsmittel in Berührung kommt und Adsorptionsmittel in die Waschflüssigkeit gelangt.

Der Waschflüssigkeit werden die organischen Anteile und Metalle durch Adsorption laufend entzogen. Dadurch wird eine Anreicherung der Schadstoffe in der Waschflüssigkeit vermieden. Dies führt zu einem besseren Reinigungswirkungsgrad und somit zu besserer Rauchgasqualität. Die Entsorgung wird technisch einfach und wirtschaftlich, da die hochgiftigen Schadstoffe im Adsorptionsmittel gefangen sind und bleiben.

Das Adsorptionsmittel ist in der Waschflüssigkeit verteilt und dauernd vorhanden, was eine optimale Adsorption der organischen Schadstoffe und Metalle ermöglicht. Dabei kann das Adsorptionsmittel auch direkt aus dem Rauchgas Schadstoffe entfernen.

Eine optimale Ausnützung und Wirkung des Adsorptionsmittels wird dadurch erzielt, dass es wie im Anspruch 3 angegeben, in eine der letzten Stufen, vorzugsweise die letzte Stufe eines mehrstufigen Waschvorgangs eingeführt wird und dann im Gegenstrom zum Rauchgas geführt wird, wie dies der Anspruch 6 angibt. Das nicht oder wenig angereicherte Adsorptionsmittel kommt dabei mit der am wenigsten belasteten Waschflüssigkeit und dem schon gut vorgereinigten Rauchgas in Berührung und das stärker angereicherte Adsorptionsmittel kommt dann mit dem noch nicht oder nur geringfügig gereinigten Rauchgas und mit höherbelasteter Waschflüssigkeit in Berührung, so dass in allen Stufen des Waschvorgangs die Adsorptionswirkung hoch bleibt.

Eine besonders effiziente Reinigung des Rauchgases wird erfindungsgemäss durch die im Anspruch 5 angegebenen Massnahmen erzielt.

Die im Anspruch 7 angegebenen Massnahmen führen zu einer besonders guten Abscheidung der organischen Schadstoffe und der Metalle aus der Waschflüssigkeit, was wiederum eine gute Reinigung des Rauchgases mit sich zieht.

In besonders bevorzugter Weise wird als Adsorptionsmittel Aktivkohle, körniges oder pulverisiertes Polystyrolpolymerisat oder ein Adsorbens auf lonenaustauscherharzbasis verwendet. Mit diesen Adsorptionsmitteln wird ein besonders grosser Reinigungswirkungsgrad erzielt.

Weitere bevorzugte Ausführungsformen des erfindungsgemässen Verfahrens sind in den weiteren abhängigen Ansprüchen angegeben.

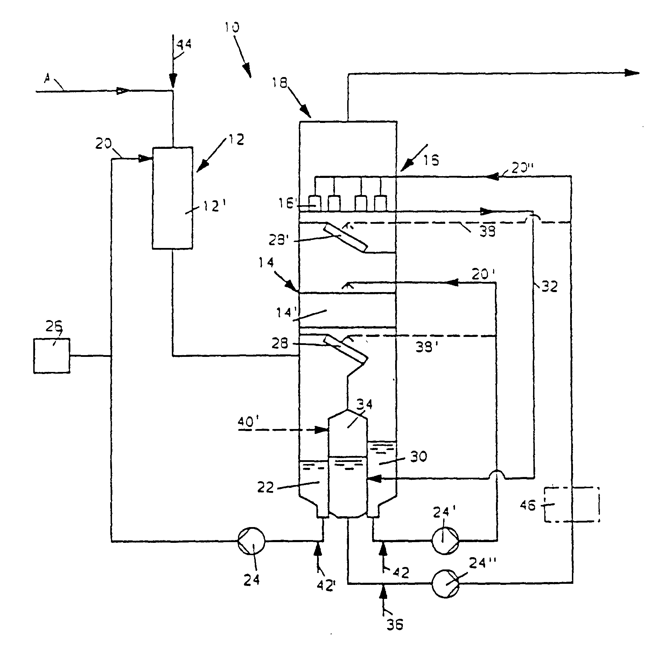

Die Erfindung wird nun anhand eines in der Figur gezeigten Ausführungsbeispiels näher umschrieben.

Die Figur zeigt rein schematisch einen dreistufigen Wäscher, bei welchem erfindungsgemäss ein Adsorptionsmittel in der Waschflüssigkeit mitgeführt wird.

Die Figur zeigt einen dreistufigen Wäscher 10 mit einer Quench-Stufe 12, einer Füllkörper-Stufe 14 und einer Ringjet-Stufe 16, die in Strömungsrichtung A des Rauchgases gesehen, hintereinander geschaltet sind. Die Füllkörper-Stufe 14 und die Ringjet-Stufe 16 sind in einem mit 18 bezeichneten Waschturm angeordnet. Vom Waschturm 18 gelangen die durch Waschen gereinigten Rauchgase in einen in der Figur nicht gezeigten Kamin. Die Rauchgas- und/oder Waschflüssigkeitsströme sind in der Figur mit Linien angedeutet.

In eine Quench 12' der Quench-Stufe 12 wird das eventuell vorgereinigte, eine Temperatur von etwa 150°C oder höher aufweisende Rauchgas eingeleitet und, wie mit dem Pfeil 20 angedeutet, Waschflüssigkeit eingespritzt. Dabei wird das Rauchgas durch die Verdampfung der Waschflüssigkeit annähernd auf die Sättigungstemperatur, d.h. auf ca. 60-70°C abgekühlt und grössere Schwebstoffe des Rauchgases gelangen in die Waschflüssigkeit. Neben der Abkühlung der Rauchgase zum Schutz der nachfolgenden Waschstufen, wird von der Waschflüssigkeit 20 HCl absorbiert. Das Rauchgas wird zusammen mit der Waschflüssigkeit unterhalb der Füllkörper-Stufe 14 in den Waschturm 18 geleitet, wobei die nicht verdampfte Waschflüssigkeit in ein im Bodenbereich des Waschturms 18 angeordnetes Sammelbecken 22, auch Sumpf genannt, abfliesst. Von da wird die Waschflüssigkeit mittels einer Zentrifugalpumpe 24 wieder in die Quench 12' gepumpt. Die Waschflüssigkeit wird somit in einen der Quench-Stufe 12 zugeordneten Kreislauf gefahren. Ein Teil der Waschflüssigkeit wird jeweils diesem Kreislauf entzogen und einer schematisch angedeuteten Weiterbehandlung 26 zugeführt. Da die Waschflüssigkeit in dieser Stufe nicht neutralisiert wird, besteht die Waschflüssigkeit aus einer 3-5 %igen HCl-Lösung.

Aus der Quench-Stufe 12 gelangen die Rauchgase durch einen unterhalb einer Füllkörperschicht 14' der Füllkörper-Stufe 14 angeordneten Tropfenabscheider 28, der das Mitreissen von Waschflüssigkeit verhindert, in die Füllkörper-Stufe 14. Beim Durchströmen durch den Füllkörper 14, werden die Rauchgase auf ihre Sättigungs- und Kühlgrenztemperatur von ca. 60-70° abgekühlt. Der Füllkörper 14 wird dabei im Gegenstrom zu den Rauchgasen intensiv gewaschen. Die grosse spezifische Oberfläche der Füllkörper bewirkt eine äusserst gute Adsorption von HCI und HF. Die Schwermetalle wie Hg, Cd, Pb, Zn kondensieren zu Schwermetallaerosolen (metallische oder in Verbindungen) und werden durch die hohe Gasfeuchtigkeit und ausreichende Verweilzeit in den Füllkörperspeicher 14' zu einer optimalen Feststoff/Aerosolabscheidung in der nachgeschalteten Ringjet-Stufe 16 konditioniert.

Die Waschflüssigkeit der Füllkörper-Stufe 14 wird in Richtung des Pfeiles 20' ebenfalls im Kreis gefahren und von oben auf die Füllkörperschicht 14' verdüst. Die durch die Füllkörperschicht 14' hindurchlaufende Waschflüssigkeit gelangt in ein ebenfalls im unteren Teil des Waschturms 18 angeordnetes zweites Sammelbecken 30, von wo es mittels einer weiteren Zentrifugalpumpe 24' wieder zu den Sprühköpfen oberhalb der Füllkörperschicht 14' gepumpt wird.

Die Füllkörper-Stufe 14 ist von der Ringjet-Stufe 16 durch einen weiteren Tropfenabscheider 28' getrennt, durch welchen hindurch das von der Füllkörperschicht 14' herkommende Rauchgas den schematisch angedeuteten und eine Multiventuri-Stufe bildenden Ringjet 16' zugeleitet wird. Dabei teilt sich der Rauchgasstrom in Teilströme von ca. 2000 m³ pro Stunde und pro Ringjet 16 auf, was zu einem hohen Abscheidewirkungsgrad in dieser Stufe führt. Die aufgewendete Kontaktenergie und damit der Abscheidegrad wird bei schwankender Rauchgasmenge dadurch konstant gehalten, dass die den Ringjets 16' zugeführte Waschflüssigkeitsmenge über den gasseitigen Druckverlust in der Ringjet-Stufe 16 geregelt wird. In der Ringjet-Stufe 16 werden aus dem Rauchgas alle Aerosole, die in den vorgeschalteten Quench- und Füllkörper-Stufen 12,14 entstanden sind, abgeschieden. Aufgrund der ebenfalls guten Absorptionseigenschaften von Ringjets 16' für gasförmige Stoffe wird in dieser Ringjet-Waschstufe 16 auch Schwefeldioxyd (SO₂) wirkungsvoll abgeschieden. Durch Zudosierung von Natronlauge (Ca(OH)₂) in die Waschflüssigkeit der Ringjet-Stufe 16 wird der pH-Wert auf ca. 6 geregelt. Oberhalb der Ringjets 16 kann ein weiterer in der Figur nicht gezeigter Tropfenabscheider vorgesehen sein, durch welchen das von den gasförmigen Schadstoffen wie HCI, HF, SO₂, Stäuben, wie Salzkondensate und Schwermetallverbindungen, Aerosolen und Wassertropfen gereinigte Rauchgas in den Kamin geleitet wird.

Die in Pfeilrichtung 20" dem Ringjet 16' zugeführte Waschflüssigkeit wird von diesem durch eine Leitung 32 in ein drittes Sammelbecken 34 im Bodenbereich des Waschturms 18 geleitet. Mittels einer weiteren Zentrifugalpumpe 24" wird die Waschflüssigkeit wieder den Ringjets 16' zugeführt.

Für die Entstickung des Rauchgases wird vor dem Waschvorgang im Wäscher 10, vorzugsweise im Brennkessel, dem Rauchgas ein Reduktionsmittel, z.B. Ammoniak, zugegeben.

Insoweit ist der weiter oben beschriebene Wäscher 10 aus dem Artikel "Mehrstufige Rauchgasreinigung für Müllverbrennungsanlagen" in der Zeitschrift wlb, Wasser, Luft und Boden, Zeitschrift für Umwelttechnik, Nr. 6. vom Juni 1989 (Autor: Martin Lemann), bekannt. Für weitere Einzelheiten und Ergänzungen, sowie auf die Weiterbehandlung der Waschflüssigkeit, wird auf die Offenbarung in diesem Artikel verwiesen.

In die Waschflüssigkeit, Wasser, der Ringjet-Stufe 16, wird an der mit dem Pfeil 36 bezeichneten Stelle ein Adsorptionsmittel eingeführt. Als Adsorptionsmittel eignet sich insbesondere feinteilige Aktivkohle, pulversiertes oder körniges Polystyrolpolymerisat (Styropor), lonenaustauscherharz, wie z.B. XAD2 (Harz) und ähnliches. Dieses Adsorptionsmittel wird mit dem Waschwasser im Kreislauf geführt und entzieht der Waschflüssigkeit, dem Wasser, durch Adsorption die organischen Schadstoffe und Metalle, insbesondere Schwermetalle wie Quecksilber.

Durch die in der Figur gestrichelt angedeutete Leitung 38 kann Waschflüssigkeit mit dem darin vorhandenen Adsorptionsmittel von der Ringjet-Stufe 16, entgegen der Strömungsrichtung der Rauchgase der vorgeschalteten Füllkörper-Stufe 14 zugeleitet werden. Wird ein nicht gezeigtes Ventil in der Leitung 38 geöffnet, wird der Tropfenabscheider 28' mit Waschflüssigkeit der Ringjet-Stufe 16 beregnet und dadurch gereinigt und Adsorptionsmittel gelangt zusammen mit dieser Waschflüssigkeit durch den Tropfenabscheider 28' hindurch auf die Füllkörperschicht 14'. Das zugeführte Adsorptionsmittel wird nun im Kreislauf der Waschflüssigkeit der Füflkörper-Stufe 14 umgewälzt. In gleicher Art und Weise wird durch eine mit 38' bezeichnete Leitung Waschflüssigkeit der Füllkörper-Stufe 14 zusammen mit darin sich befindendem Adsorptionsmittel der vorgeschalteten Quench-Stufe 12 zugeführt. Durch Öffnen eines in der Figur nicht gezeigten Ventils in der Leitung 38' wird der Tropfenabscheider 28 mit Waschflüssigkeit der Füllkörper-Stufe 14 besprüht und dadurch gereinigt. Diese Waschflüssigkeit zusammen mit Adsorptionsmittel gelangt durch den Tropfenabscheider 28 hindurch in den Kreislauf der Waschflüssigkeit der Quench-Stufe 12.

In der Füllkörper- und Quench-Stufe 14,12 entwikkelt das Adsorptionsmittel dieselbe weiter oben beschriebene Wirkung wie in der Ringjet-Stufe 16.

In der Quench-Stufe 12' werden grosse Mengen der Waschflüssigkeit verdampft. Dieser Dampf gelangt zusammen mit dem Rauchgas in die Füllkörper-Stufe 14, was zur Folge hat, dass das Niveau des Sumpfes im Sammelbecken 22 absinkt. Sobald ein unterer Niveaugrenzwert erreicht ist, wird das nicht gezeigte Ventil in der Leitung 38' geöffnet, wodurch nun Waschflüssigkeit von der Füllkörper-Stufe 14 solange der Quench-Stufe 12 zugeführt wird, bis das Sammelbecken 22 wieder gefüllt ist. Dies hat ein Absenken des Sumpfniveaus im zweiten Sammelbecken 30 zur Folge und sobald ein unteres Niveau darin erreicht ist, wird das ebenfalls nicht gezeigte Ventil in der Leitung 38 geöffnet, wodurch nun solange Waschflüssigkeit aus der Ringjet-Stufe 16 der Füllkörper-Stufe 14 zugeführt wird, bis das zweite Sammelbecken 30 wieder gefüllt ist. Der Waschflüssigkeitsverlust in der Ringjet-Stufe 16 wird durch Zuführen von Wasser durch die strichpunktiert angedeutete Wasserleitung 40' in das dritte Sammelbecken 34 kompensiert. Das Adsorptionsmittel gelangt somit im Gegenstrom zum Rauchgas von der Ringjet-Stufe 16 über die Füllkörper-Stute 14 in die Quench-Stufe 12. Dieses Gegenstromprinzip hat zur Folge, dass Rauchgase mit tiefer Schadstoffkonzentration mit einer Waschflüssigkeit, welche ebenfalls eine geringe Schadstoffkonzentration aufweist, gewaschen werden und in gleicher Art und Weise ist das nicht oder wenig beladene Adsorptionsmittel mit der Waschflüssigkeit mit tiefer Schadstoffkonzentration in Berührung. Diese Konzentrationen nehmen entgegen der Strömungsrichtung der Rauchgase in jeder Stufe zu. Aus der Ringjet-Stufe 16 gegebenenfalls mitgerissene Nebeltropfen weisen die tiefste Schadstoffkonzentration im Wäscher 10 auf.

Es ist auch denkbar, Adsoptionsmittel direkt der Waschflüssigkeit der Füllkörper-Stufe 14 und/oder Quench-Stufe 12 zuzuführen, wie dies mit den Pfeilen 42 und 42' angedeutet ist.

Adsorptionsmittel wird vor dem Wäscher 10 in das Rauchgas einsedüst, wie dies der Pfeil 44 andeutet. Das in den Rauchgasstrom eingegebene Adsorptionsmittel entzieht dem Rauchgas direkt anorganische Schadstoffe und Metalle und gelangt durch den Waschvorgang in die Waschflüssigkeit aller Stufen. Selbstverständlich kann das Adsorptionsmittel an nur einer oder an mehreren der Stellen 36,42,42',44 eingeführt werden.

Durch das Mitführen des Adsorptionsmittels in Rauchgas bzw. in der Waschflüssigkeit werden auf optimale Weise sowohl dem Rauchgas als auch der Waschflüssigkeit durch Adsorption Schadstoffe, wie Dioxine, Furane und Quecksilber, entzogen.

Es ist auch möglich, die Waschflüssigkeit einer Stufe oder mehreren Stufen durch einen Adsorptionsfilter zu führen, wie dies in der Figur anhand eines strichpunktiert angedeuteten Aktivkohlefilters 46 in der Ringjet-Stufe 16 gezeigt ist.

Die vom Adsorptionsmittel adsorbierten Schadstoffe sind darin fest eingebunden und können daraus mit einer thermischen Behandlung nur schwierig und bei hohen Temperaturen von > 300°C wieder herausgelöst werden. Wird in der Weiterbehandlung 26 die der Quench-Stufe 12 entzogene Waschflüssigkeit in einem Sprühtrockner eingedampft, so bleiben die vom Adsorptionsmittel adsorbierten Schadstoffe eingebunden und werden nicht wieder in das Rauchgas freigesetzt. Das Adsorptionsmittel fällt im Sprühtrockner zusammen mit andern trockenen Salzen an.

Andererseits kann in der Weiterbehandlung 26 die Waschflüssigkeit auch gereinigt werden. Da die organischen Schadstoffe und Metalle, insbesondere Schwermetalle wie Quecksilber, im Adsorptionsmittel gefangen sind, genügt dabei eine reine Hydroxidfällung, beispielsweise eine Neutralisation mit Kalkmilch,und zusätzliche Fällungsmittel, wie beispielsweise FHM oder TMT 15, sind nicht oder nur in kleinsten Mengen nötig. Die Reinigung der Waschflüssigkeit kann durch Zuführen von zusätzlichem Adsorptionsmittel in der Neutralisationsstufe noch verbessert werden.

Die bei der Abwasserreinigung ausgefällten Teile können abfiltriert und in einer Filterpresse zu einem festen Filterkuchen gepresst oder in Zentrifugen oder anderen Filtrationseinrichtungen ausgeschieden werden. Solche Filterkuchen bzw. Rückstände aus Zentrifugen und Filtrationseinrichtungen, sowie Rückstände des Sprühtrockners können problemlos abgelagert werden, da die Schadstoffe aus dem Adsorptionsmittel nicht mehr freigesetzt werden.

## Patentansprüche

1. Verfahren zum Reinigen von Rauchgasen durch Waschen, bei dem man zum Entfernen von organischen Schadstoffen und Metallen, insbesondere Schwermetallen, ein feinteiliges, pulverisiertes oder körniges Adsorptionsmittel vor dem Waschvorgang in das Rauchgas eingibt und im Wäscher (10) mittels einer Waschflüssigkeit das Adsorptionsmittel aus dem Rauchgas auswäscht und in der Waschflüssigkeit mitführt.

2. Verfahren nach Anspruch 1, **dadurch gekennzeichnet, dass** das Adsorptionsmittel auch direkt der Waschflüssigkeit zugegeben wird.

3. Verfahren nach Anspruch 1 oder 2, **dadurch gekennzeichnet, dass** das Adsorptionsmittel auch in die Waschflüssigkeft einer der letzten Stufen (14, 16), vorzugsweise der letzten Stufe (16) eines mehrstufigen Waschvorgangs einführt wird.

4. Verfahren nach einem der Ansprüche 1 bis 3, **dadurch gekennzeichnet, dass** das Adsorptionsmittel in einem dreistufigen Wäscher (10) mit einer Quench- (12), Füllkörper- (14) und Ringjetstufe (16) auch in die Ringjetstufe (16) eingeführt wird.

5. Verfahren nach einem der Ansprüche 1 bis 4, **dadurch gekennzeichnet, dass** das Adsorptionsmittel auch in mehrere Waschstufen (12, 14, 16) eingeführt wird.

6. Verfahren nach einem der Ansprüche 1 bis 5, **dadurch gekennzeichnet, dass** das Adsorptionsmittet in der Waschflüssigkeit im Gegenstrom zum Rauchgas geführt wird.

7. Verfahren nach einem der Ansprüche 1 bis 8, **dadurch gekennzeichnet, dass** die im Kreislauf geführte Waschflüssigkeit durch ein Adsorptionsfilter, vorzugsweise ein Aktivkohlefilter (46) geleitet wird.

8. Verfahren nach einem der Ansprüche 1 bis 7, **dadurch gekennzeichnet, dass** der Waschflüssigkeit in einer Neutralisationsstufe (26) zusätzlich ein Adsorptionsmittel zugegeben wird.

9. Verfahren nach einem der Ansprüche 1 bis 8, **dadurch gekennzeichnet, dass** als Adsorptionsmittel Aktivkohle, Polystyrolpolymerisat oder lonenaustauscherharz verwendet wird.

## Claims

1. Process for cleaning flue gases by scrubbing, in which to remove organic pollutants and metals, in particular heavy metals, a finely divided, pulverulent or granular adsorbent is added to the flue gas upstream of the scrubbing process and, in the scrubber (10), the adsorbent is scrubbed out of the flue gas by means of a scrubbing liquid and is entrained in the scrubbing liquid.

2. Process according to Claim 1, **characterized in that** the adsorbent is also added directly to the scrubbing liquid.

3. Process according to Claim 1 or 2, **characterized in that** the adsorbent is also introduced into the scrubbing liquid of one of the last stages (14, 16), preferably the last stage (16), of a multistage scrubbing process.

4. Process according to one of Claims 1 to 3, **characterized in that** the adsorbent is also introduced into the ring jet stage (16) in a three-stage scrubber (10) having a quench stage (12), packing stage (14) and ring jet stage (16).

5. Process according to one of Claims 1 to 4, **characterized in that** the adsorbent is also introduced into a plurality of scrubbing stages (12, 14, 16).

6. Process according to one of Claims 1 to 5, **characterized in that** the adsorbent in the scrubbing liquid is conducted in counter-current to the flue gas.

7. Process according to one of Claims 1 to 8, **characterized in that** the circulated scrubbing liquid is passed through an adsorbent filter, preferably an activated carbon filter (46).

8. Process according to one of Claims 1 to 7, **characterized in that** an adsorbent is additionally added to the scrubbing liquid in a neutralization stage (26).

9. Process according to one of Claims 1 to 8, **characterized in that** the adsorbent used is activated carbon, polystyrene polymer or ion exchange resin.

## Revendications

1. Procédé pour la purification de fumées par lavage, dans lequel, pour l'élimination de substances nocives organiques et de métaux, notamment de métaux lourds, on ajoute un absorbant en particules fines, en poudre ou en grains dans la fumée avant l'opération de lavage, et cet absorbant est lavé hors de la fumée dans le laveur (10) au moyen d'un liquide de lavage, et entraîné dans le liquide de lavage.

2. Procédé selon la revendication 1, **caractérisé en ce que** l'absorbant est également ajouté directement au liquide de lavage.

3. Procédé selon l'une ou l'autre des revendications 1 et 2, **caractérisée en ce que** l'absorbant est également introduit dans le liquide de lavage de l'un des derniers stades (14, 16), de préférence au dernier stade (16) d'une opération de lavage à plusieurs stades.

4. Procédé selon l'une des revendications 1 à 3, **caractérisé en ce que**, dans un laveur (10) à trois stades avec stade de refroidissement par injection (12), stade avec corps de remplissage (14) et stade avec jet annulaire (16), l'absorbant est introduit également dans le stade avec jet annulaire (16).

5. Procédé selon l'une des revendications 1 à 4, **caractérisé en ce que** l'absorbant est également introduit à plusieurs stades de lavage (12, 14, 16).

6. Procédé selon l'une des revendications 1 à 5, **caractérisé en ce que** l'absorbant dans le liquide de lavage est conduit relatif la fumée en contre-courant.

7. Procédé selon l'une des revendications 1 à 6, **caractérisé en ce que** le liquide guidé en circuit est passé à travers un filtre d'adsorption, de préférence un filtre à charbon actif (46).

8. Procédé selon l'une des revendications 1 à 7, **caractérisé en ce qu'**on ajoute en supplément un adsorbant au liquide de lavage, dans un stade de neutralisation (26).

9. Procédé selon l'une des revendications 1 à 8, **caractérisé en ce qu'**on utilise comme adsorbant du charbon actif, du polymérisat de polystyrène ou de la résine échangeuse d'ions.
